(19) Europäisches Patentamt

European Patent Office

Office européen des brevets

(11) Veröffentlichungsnummer: **0 608 287 B1**

(12) **EUROPÄISCHE PATENTSCHRIFT**

(45) Veröffentlichungstag der Patentschrift: **30.08.95**

(21) Anmeldenummer: **92921124.1**

(22) Anmeldetag: **13.10.92**

(86) Internationale Anmeldenummer:
**PCT/EP92/02356**

(87) Internationale Veröffentlichungsnummer:
**WO 93/08143 (29.04.93 93/11)**

(51) Int. Cl.⁶: **C05G 1/00**, C05B 17/00,
C05D 1/04, C05F 17/00

(54) **VERFAHREN ZUR NATURGEMÄSSEN BILDUNG VON KRÜMELSUBSTANZ GARER AGRARBÖDEN.**

(30) Priorität: **14.10.91 DE 4133984**

(43) Veröffentlichungstag der Anmeldung:
**03.08.94 Patentblatt 94/31**

(45) Bekanntmachung des Hinweises auf die
Patenterteilung:
**30.08.95 Patentblatt 95/35**

(84) Benannte Vertragsstaaten:
**AT BE CH DE DK ES FR GB GR IE IT LI LU MC
NL SE**

(56) Entgegenhaltungen:
**EP-A- 0 221 219
EP-A- 0 444 392
BE-A- 419 899
DD-A- 283 369
FR-A- 2 023 318**

(73) Patentinhaber: **KÜRNER, Rudolf
Hessigheimer Strasse 22
70437 Stuttgart (DE)**

(72) Erfinder: **KÜRNER, Rudolf
Hessigheimer Strasse 22
70437 Stuttgart (DE)**

(74) Vertreter: **Dost, Wolfgang, Dr.rer.nat.,
Dipl.-Chem. et al
Patent- und Rechtsanwälte
Bardehle . Pagenberg . Dost . Altenburg .
Frohwitter . Geissler & Partner
Galileiplatz
1
D-81679 München (DE)**

EP 0 608 287 B1

## Beschreibung

Die Erfindung betrifft ein Verfahren zur Bildung eines Vollwertdüngers durch biologischen Aufschluß von Mineralien in Gegenwart von Ca-Verbindungen, Ton und pflanzlichen und tierischen organischen Abfällen. Des weiteren betrifft die Erfindung die Bereitstellung eines Vollwertdüngers (Mineralhumus) nach diesem Verfahren.

Ein grundlegendes Problem der Landwirtschaft besteht heutzutage in der zunehmenden Verarmung landwirtschaftlich genutzter Böden an biologischer Aktivität. Diese Verarmung läßt sich an der geringen Anzahl von Regenwürmern leicht feststellen und bedeutet gleichzeitig eine mangelhafte Bereitstellung von Mineralien für die Pflanzenernährung durch den Boden und eine mangelhafte Krümeligkeit des Bodens.

Für den landwirtschaftlich genutzten Boden mit biologischer Aktivität, das heißt für den gesunden und fruchtbaren Boden, ist die sogenannte Bodengare der typische Inbegriff. Unter einem garen Akker wird ein krümeliger, gut durchlüfteter Boden verstanden, der beim Ackern keine Schollen macht. Wesentlich für den garen Boden ist also seine Krümeligkeit. Das heißt jedoch nicht, daß ein Acker, der mit dem Pflug oder auf andere mechanische Weise krümelig gemacht worden ist, zwangsläufig auch gar wäre. Vielmehr ist Voraussetzung für den garen Boden, daß die Krume über die gesamte Vegetationszeit krümelig bleibt und nicht unter der verschlämmenden Wirkung von Wasser zusammenbricht.

Diese Bodengare wird durch die heutigen in der Landwirtschaft verwendeten Methoden und Dünger/Bodenverbesserungsmittel weder erhalten noch wiederhergestellt. Das heißt, daß auch eine intensive Behandlung der Böden mit Handelsdüngern (z. B. Ammonsalpeter, Harnstoff, Kalidünger, Rhenaniaphosphat, Thomasmehl) und/oder Wirtschaftsdüngern (z. B. Jauche, Mist, Holzasche, Knochenmehl, Kompost) einem Verlust an Bodengare nur unzureichend bzw. gar nicht entgegenwirken kann. Des weiteren werden die Böden durch Landwirte, die nicht erkennen, daß dem Boden häufig nur ein oder mehrere bestimmte Bestandteil(e) fehlen, teilweise überdüngt, so daß die zusätzlich im Dünger enthaltenen Komponenten für den Boden wertlos sind und sich in Oberflächen- und Grundwässern anreichern und wesentlich zu deren Eutrophierung beitragen.

Trotz normaler Düngungs- und Bearbeitungsmethoden läßt sich eine zunehmende Bodenmüdigkeit in Form von langsam und ständig sinkenden Erträgen feststellen, wobei die Erschöpfung des Bodens an Spurenelementen, der meist einseitige Nährstoffentzug, die Anhäufung von wasserlöslichen, das Pflanzenwachstum hemmenden Stoffen neben dem Verlust der Bodengare eine ursächliche Bedeutung haben.

Der für die Pflanzenernährung wesentliche Teil des Bodens ist der sog. Mineralhumus, der mit der landläufig als Humus bezeichneten Substanz lediglich den Gehalt an Huminsäuren gemein hat. Aus diesem Grund wird im weiteren Text zwischen dem sog. Humus ("Humus") und dem erfindungsgemäßen wahren Humus (Mineral-humus) unterschieden.

Diese in den Fachkreisen falsche Ansicht bezüglich Humus führt daher dazu, daß die heute optimal erscheinende Düngung durch eine Kombination aus organischem und mineralischem Dünger erfolgt, die gemeinsam, nach Einbringung in/auf die Böden, von Mikroben zu Mineralhumus umgesetzt werden sollen. Dies erfolgt allerdings nur unzureichend, was sich in einem ungenügenden und stetig verringernden Mineralhumusgehalt der Böden manifestiert. Auch wird durch die heute optimal erscheinende Düngung keineswegs die Krümeligkeit des garen Bodens erhöht oder gar wiederhergestellt.

Die DE-OS 36 14 183 hat Calciumsulfat zusammen mit Dolomit, Soda, Borax und Citronensäure als Dünge- oder Schnellkompostierungsmittel für organische Abfälle vorgeschlagen.

Gemäß der DE 37 44 317 wird bei der Kompostierung oder Flächendüngung die Qualität des Humus wesentlich verbessert, wenn zur Fermentierung organischer Abfallstoffe Calciumsulfat im Gemisch mit Montmorillonit und Thomasmehl und/oder Rohphosphatmehl verwendet wird.

Weitere Verfahren zur Herstellung von Bodenverbesserungs-/Bodenhilfsmitteln/Naturdüngern sind immer wieder vorgeschlagen worden. So beschreiben z.B. die DE-OS 30 35 178 und die DE 36 40 785 solche Mittel. In der ersten Schrift handelt es sich um ein Gesteinsmehl oder um eine Mineralienzusammensetzung, die Si, Al, Ca, Mg, Fe, Ti, K, Na, P sowie Spurenelemente und Seltene Erden enthalten. Das in der zweiten Schrift beschriebene Mittel ist ein Gemisch aus einem Gesteinsmehl und Sägemehl, Spreu oder gemahlener Rinde.

Die in den DE-OS-en 20 45 648 und 32 26 226 beschriebenen Dünger bestehen aus einem Gemisch verschiedener Oxide, z.B. $SiO_2$, $Fe_2O_3$, $Al_2O_3$, $CaO$, $MgO$, $K_2O$, $P_2O_5$.

Ein anderes Mittel ist in den DE-OS-en 18 03 103 und 19 29 195 beschrieben. Dabei werden natürliche organische Substanzen und/oder Kaffeeextrakte vergoren, die zusätzlich silikathaltige Komponenten und Formiate enthalten.

Die EP-A 221 219 beschreibt ein Bodenverbesserungsmittel, das durch Fermentation eines Gemisches aus Klärschlamm, einem Kohlenstoffträger, Calciumcarbonat, einem natürlichen Phosphat, Gips und Maisstärkemehl erhalten wird.

Die EP-A 444 392 schließlich beschreibt ein Verfahren zur Herstellung von Düngemitteln oder Bodenhilfsstoffen aus mineralischen und/oder organischen Komponenten, wobei als Mineralien verschiedene Carbonate verwendet werden können, die für eine Abpufferung des sauren pH-Wertes nötig sind. Weder Phosphat, noch Spurenelemente Gips oder Ton sind Bestandteile dieser Mittel.

Eine weitere, auch schon erwähnte, die Fruchtbarkeit des Bodens erhaltende bzw. steigernde Maßnahme besteht in der Melioration (Bodenverbesserung) durch sog. Bodenverbesserungsmittel. Sie beeinflussen die allgemeine Bodenstruktur, wie z. B. Krümelung, Wasserbindungsfähigkeit, Gasdurchlässigkeit und Lockerungsgrad, ohne Pflanzennährstoffe zu enthalten. Im weitesten Sinne zählen z. B. Alginate, Pektine, Silikate, Torfmull und Eisensulfate zu den Bodenverbesserungsmitteln. Größere Bedeutung in diesem Zusammenhang haben die synthetischen Bodenverbesserungsmittel (z. B. Polyacrylnitril, Vinylacetat-Copolymerisate, Polyvinylpropionat und Butadien-Styrol-Copolymerisate). Auch gewisse Maßnahmen wie Bewässerung, Fruchtwechsel oder Erosionsschutz zählen zu den Bodenverbesserungsmitteln.

Wesentlich für jegliches Leben im Boden, d.h. also für Pflanzenwurzeln und Bodenorganismen, ist der Lebensraum, der ein aus unterschiedlich großen Poren bestehendes Hohlraumsystem ist. Dabei dienen die groben Poren (> 0,03 mm) im wesentlichen zur Durchlüftung und einer schnellen Wasserverteilung, wohingegen die mittleren Poren (0,003-0,03 mm) das Wasserleitungssystem des Bodens bilden und zur Wasserspeichetung benötigt werden. Die feinen Poren (< 0,003 mm) schließlich speichern die letzten Wasservorräte in besonders trockenen Perioden.

Diese Gliederung des Lebensraumes entspricht auch den Ansprüchen der verschieden großen Bodenorganismen, deren Zusammenleben nicht immer ganz friedlich verläuft. So sind z.B. die Bakterien in kleinen Hohlräumen vor den feindlichen Zugriffen größerer Organismen, wie der Protozoen, gesichert. Ebenso existieren im Mikrobereich anaerobe Zonen mit entsprechender Besiedelung, während insbesondere der Makrobereich durch Luft-Sauerstoff optimal belüftet sein soll. Jede Veränderung in der Hohlraumgliederung hat daher nicht bloß eine Umstellung des Wasser- und Lufthaushaltes zur Folge sondern sie bewirkt auch eine soziologische Umschichtung seiner Bewohner.

Im Idealfall bestehen die groben, mittleren und feinen Poren zu angenähert gleichen Anteilen im Boden nebeneinander, um ein optimales Gleichgewicht zwischen Durchlüftung, Wassertransport und Wasserspeicherung zu gewährleisten. Dabei machen 1-3 mm große Krümel die Krümelstruktur des Bodens aus, wobei die Zwischenräume zwischen diesen Krümeln die groben Poren darstellen, während die mittleren und feinen Poren in den Krümeln selbst liegen. Es ist leicht einzusehen, daß die Krümel miteinander verwachsen sein müssen, um kapillare Wasserbewegungen von einem zum nächsten Krümel zu ermöglichen. Dieses Verwachsen kann jedoch durch mechanische Krümelung (z. B. Pflügen) des Bodens nicht erzielt werden. Vielmehr erfolgt dieses Verwachsen der Krümel aus Primäraggregaten von 0,1-0,2 mm Größe (Mineralteilchen mit Ton-Humus-/Ton-Eiweiß-Komplexen als elastischem Kitt) durch Bodenorganismen zu den 1-3 mm großen Krümeln. Dieser Vorgang wird als "Lebendverbauung" bezeichnet, wie auch die Bildung des nächsthöheren festen Verbunds der Krümel mit den Wurzeln der Pflanzen. Die Ton-Humus-/Ton-Eiweiß-Doppelkomplexe wiederum werden gebildet durch kolloidale Ausfällungen von Huminsäuren/Protein mittels Ca $^{2+}$ mit den submikroskopischen Tonteilchen als Addukt.

Bisher ist man stets davon ausgegangen, daß der Mineralhumus im Boden selbst entstehen muß, um das Bodengefüge, d.h. die Primäraggregate und ihre Wasserbeständigkeit, zu verbessern. Alle Versuche, dem Agrarboden fertigen Humus zur Verfügung zu stellen, führten nicht zu dem erhofften Erfolg, da der "Humus" in keinem Fall, unabhängig von weiteren Zusätzen bei seiner Bildung, mit seiner biologischen Kraft in das Bodengefüge eingewandert ist; diese Kraft war nicht vorhanden, da es eben kein Mineralhumus war.

Ebenfalls von entscheidender Bedeutung für den Fruchtertrag des Bodens ist dessen Fähigkeit, den ihm in Form von Ammoniumionen angebotenen Stickstoff (z. B. aus organischen Wirtschaftsdüngern wie Jauche, Gülle oder Hühnerkot) zu binden und somit den Pflanzen zur Aufnahme zugänglich zu machen. Aufgrund der Flüchtigkeit von Ammoniumsalzen ist dies derzeit aber nur sehr begrenzt der Fall. Im Gegenteil, der größere Teil des als Ammoniumstickstoff vorliegenden Stickstoffs gelangt als Ammoniak in die Atmosphäre und ist nach neuesten Erkenntnissen zumindest in vorwiegend agrarischen Regionen wesentlich für das Sterben des Waldes mitverantwortlich.

Neben dem Problem, die ständig wachsende Erdbevölkerung ernähren zu müssen, bedrohen auch die ständig wachsenden Müllberge und der kontinuierlich zunehmende Kohlendioxidgehalt in der Erdatmosphäre das Leben auf der Erde. Die zunehmende Kohlendioxidkonzentration wird u. a. bedingt durch das sich immer weiter verschlechternde Verhältnis zwischen Anzahl der Menschen und Begrünung, da nur der pflanzliche Stoffwechsel - im Gegensatz zum tierischen - zur Bildung organischer Materie aus Kohlendioxid und Wasser befähigt ist. Die Müllverbrennung, die heute in den industralisierten Staaten oftmals als Lösung des einen Problems (Abfallbeseitigung) angesehen wird, verstärkt das andere Problem (ständig steigende Konzentration an Kohlendioxid in der Erdatmosphäre, Klimakatastrophe) dadurch, daß organische Substanzen unnötigerweise aufoxidiert und als Kohlendioxid und Wasserdampf in die Atmosphäre abgegeben werden.

Wie bereits vorab erwähnt, leiden die landwirtschaftlich genutzten Böden oftmals unter mangelhafter Krümeligkeit und einem Mangel an Mineralien. Da aber auch der menschliche Organismus einen gewissen Minimalbedarf an den verschiedensten Mineralien aufweist, der Mensch aber das letzte Glied in der Nahrungskette darstellt, wirken sich diese Mangelerscheinungen der landwirtschaftlich genutzten Böden zwangsläufig negativ auf den menschlichen Mineralhaushalt aus.

Dasselbe trifft natürlich auch für den tierischen Organismus zu. D.h., nur gesunde und vor allem mit Spurenelementen ausreichend versorgte Tiere stellen gegebenenfalls mittels ihres Fleisches eine Quelle voll- und hochwertiger Nahrung für den Menschen dar.

Keines/Keiner der im Stand der Technik oben beschriebenen Mittel/Dünger ist in der Lage, die Krümeligkeit des Bodens gemäß oben beschriebenen Sachverhalts positiv zu beeinflussen und dabei gleichzeitig dem Boden, und damit den Pflanzen, als dauerhafter Nährstoffspender zu dienen. Zwar vermögen die konventionellen Mittel/Dünger, der Pflanze einen vorübergehenden Schub an bestimmten Nährstoffen oder Mineralien zukommen zu lassen. Diese positive Wirkung ist jedoch nicht von langer Dauer, da die Nährstoffe aufgrund ihrer Wasserlöslichkeit z.B. durch Regenwasser leicht ausgewaschen werden. Eine durch menschlichen Eingriff induzierte bzw. geförderte (Mineral)-Humusbildung im Boden konnte bisher nicht erzielt werden.

Vielmehr wurde bei allen bisherigen Kompostierungen und bei der Verrottung von Ernterückständen bzw. Stall-/Wirtschaftsdüngern auf freiem Feld organische Substanz zwar abgebaut und mikrobiell zu Kohlendioxid, Stickstoff, Stickstoffoxid ($N_2O$) und Wasser unter Bildung von Huminsäuren umgesetzt. Dies ist, zumindest teilweise, auch in Gegenwart von puffernden Mineralien durchgeführt worden. Diese Kompostierungen und Verrottungen müssen jedoch als aerobes Pendant zum vorzeitlichen, anaeroben Torf-Entstehungsprozeß betrachtet werden. Der Ton-Humus-/Ton-Eiweiß-Doppel-Komplex, d.h. die die Fruchtbarkeit und die Pflanzengesundheit ausmachende Krümelsubstanz garer Agrarböden wird jedoch nicht gebildet bzw. aufgebaut. Deshalb führen die bisherigen Verfahren zu einer Vergeudung der "Biokraft" der Abfallstoffe unter unnötiger Bildung von Kohlendioxid und Stickstoffoxid ($N_2O$).

Demgemäß besteht die Aufgabe der vorliegenden Erfindung darin, ein Verfahren bereitzustellen, das zunächst Biomasse partiell abbaut und die gebildeten Huminsäuren und niedermolekularen Proteine über Komplexe mit Ton und deren Aggregierung mit Mineralien fermentativ zu 1-3 mm großen Krümeln aufbaut.

Gelöst wird diese Aufgabe durch das Verfahren nach Anspruch 1. Dabei bilden einerseits lignozellulosehaltiger pflanzlicher und andererseits proteinhaltiger tierischer Abfall bzw. Klärschlamm im Beisein von allen essentiellen Mineralien, Spurenelementen, Ton und Ca-Ionen Primäraggregate. Die in Wasser kolloidal gelösten Huminsäuren werden zunächst durch Ca-Ionen neutralisierend und wasserunlöslich gefällt und dann durch Anlagerung an die submikroskopisch kleinen Tonteilchen ein elastischer Kitt für die gleichfalls vorhandenen Mineralteilchen gebildet. Dieser Vorgang verläuft mit allen Bestandteilen in statu nascendi.

Die so gebildeten, im Vergleich zu den Mikroben und Tonteilchen (Größen etwa 1 bzw. 0,2 $\mu m$) relativ sperrigen Primäraggregate können nunmehr mittels Organismenkolonien zu Aggregaten 2. Ordnung, den Krümeln mit einem Durchmesser von 1-3 mm, lebendverbaut werden. Die Mineralteilchen werden dabei durch die Ausscheidungen der Mikroben aufgeschlossen, was sie sowohl für die Mikroben als auch für die Pflanzen verfügbar macht. Nur dieses zeitgleiche Komplettangebot aller oben genannten Stoffe gemäß dem Verfahren nach Anspruch 1 bei mikrobengerechten Rahmenbedingungen in optimaler räumlicher Nähe (auf Grund der Mikronisierung) ermöglicht die die Natur nachahmende Bildung der Krümelsubstanz (Mineralhumus).

Unter mikrobengerechten Rahmenbedingungen werden solche verstanden, die Mineralstoffe, Kohlenhydrate und Proteine in homogener Verteilung und in ausreichender Menge zur Verfügung stellen. Des weiteren betrifft der Begriff der mikrobengerechten Rahmenbedingungen das ausreichende Vorhandensein aller für Mikroben essentieller Substanzen und schließlich auch die physikalischen Parameter wie Sauerstoff, Wasser, Temperatur, Vermeidung unnötiger Bewegung sowie die Möglichkeit für die Mikroben, sich auf einer Unterlage festsetzen zu können.

Eine vorteilhafte Wirkung der vorliegenden Erfindung besteht darin, ein Verfahren zur Verfügung zu stellen, das die schnelle Umsetzung von Abfällen verschiedenster Art in ein die Krümeligkeit des garen Bodens verbesserndes und den Pflanzen dauerhaft Nähr- und Mineralstoffe zur Verfügung stellendes Universalmittel (Mineralhumus, Vollwertdünger) ermöglicht. Vorzugsweise soll auch die Bildung überflüssigen Kohlendioxids dadurch vermieden werden, daß die organischen Abfälle von Pflanze und Tier eben nicht bis auf die Stufe des Kohlendioxids und Wasserdampfs aufoxidiert werden. Ferner bewirkt der so gebildete Vollwertdünger (Mineralhumus, Universalmittel) eine deutliche Steigerung von Pflanzenwuchs und Früchteertrag sowohl in quantitativer als auch in qualitativer Hinsicht, wenn er in einer Menge von 1 - 6, vorzugsweise 2 - 5%, bezogen auf das Gewicht des zu düngenden Bodens, in homogener Verteilung dem zu düngenden Boden zugesetzt wird.

Des weiteren stellt die vorliegende Erfindung ein Universalmittel (Mineralhumus, Vollwertdünger) zur Verfügung, das (der) nicht nur die Krümeligkeit des garen Bodens erhöht, sondern dessen einzelne Mineralkomponenten (Ionen) als Depotform auch im Boden verbleiben und nicht durch Regen oder Bewässerung ausgewaschen werden. Somit sind die Mineralkomponenten für die Pflanze zwar nur in geringer, aber ausreichender, Konzentration und fortlaufend über einen langen Zeitraum verfügbar. Der Nachteil heutiger konventioneller wasserlöslicher Dünger besteht darin, daß sie nach dem Ausbringen auf/in den Boden kurzzeitig für eine viel zu hohe Ionenkonzentration und deshalb für einen osmotischen Schock für die Mikroben des Bodens sorgen. Andererseits können die Pflanzen die hohen Konzentrationen an Nährstoffen/Spurenelementen gar nicht vollständig aufnehmen, so daß die Nährstoffe des ausgebrachten Düngers zum großen Teil ausgewaschen werden und zur Eutrophierung der Gewässer beitragen.

Darüberhinaus soll die aufgrund von in/auf Böden aufgebrachten annomiumstickstoffreichen Wirtschaftsdüngern verursachte Emission von Ammoniak in die Atmosphäre reduziert und gleichzeitig der Ammoniumstickstoff im Boden in einer für Pflanzen verstoffwechselbaren Form deponiert werden.

Eine Komplexierung des Ammonium-Stickstoffs erfolgt nicht nur mit dem schon erwähnten Calciumsulfat, sondern zusätzlich auch durch Ionenaustausch an dem ebenfalls vorhandenen Ton, vorzugsweise Bentonit/Montmorillonit, Vermiculit und Illit. Auch andere stickstoffhaltige Substanzen wie z. B. Proteine der organischen Wirtschaftsdünger werden als Komplex/Einlagerungsverbindung gebunden, so daß der Stickstoff-Düngewert voll erhalten bleibt. Dadurch können Mikroben und Pflanzen den Stickstoff z. B. als Ammoniumion direkt aufnehmen und verwerten, ohne ihn vorab mikrobiell zu Nitrat abzubauen, so daß eine Nitratanreicherung in den Pflanzen von sich aus ausgeschlossen ist.

All diese Aufgaben werden erfindungsgemäß gelöst durch das Verfahren gemäß Patentanspruch 1. Es stellt einen einfachen Aufschluß von unlöslichen Mineralien, vorzugsweise Abfallmineralien, durch Fermentierung von organischen Abfallstoffen/Hausmüll in Gegenwart von Ton und Ca-Verbindungen bei dessen gleichzeitiger umweltgerechter Entsorgung dar, wobei alle Komponenten (d.h. organischer Abfall, Mineralien, Ton und Gips) in homogener Verteilung vorliegen. Damit kann ein beträchtlicher Teil des in den Industriestaaten anfallenden Mülls, der sonst entweder deponiert (z.B. Gips) oder verbrannt wird (z.B. Hausmüll), umweltschonend, d.h. ohne unnötige Mehrerzeugung von Kohlendioxid, und nutzbringend, d.h. zur Herstellung eines bodenverbessernden Vollwertdüngers, entsorgt werden. Bevorzugt sind einfache und schnelle Aufschluß-Verfahren (mikrobielle Blitzaufschlüsse), die sich zur Fermentation des Gemisches aus organischem Abfall und Mineralien-(gemisch) Biomasse, vorzugsweise mikrobiologischer Biomasse, wie Klärschlamm, bedienen.

Die Erfindung betrifft weiter ein Vollwertdüngermaterial nach Anspruch 14, das aus pflanzlichem und tierischem organischem Abfall, einem Mineraliengemisch mit/ohne Spurenelemente sowie Ton und mindestens einer Ca-Verbindung zusammengesetzt ist.

Die Erfindung betrifft ferner einen Mineralhumus (Vollwertdünger), der als das Produkt des Verfahrens nach Anspruch 1 erhalten werden kann. Er stellt ein universell geeignetes Konzentrat zur Verbesserung des Bodens, insbesondere seiner Wasserhaltefähigkeit und Luftdurchlässigkeit, aber auch zur Förderung eines biologisch intakten und damit auch gegenüber Schädlingsbefall und mechanischen Einwirkungen umfassend widerstandsfähigen Pflanzenwachstums, dar. Dieses Konzentrat bleibt dem Boden und somit den Pflanzen erhalten und wird nicht ausgewaschen, so daß es keine Gewässer verunreinigen kann. Vielmehr bewirkt es vom ersten Tag seiner Anwendung eine erhöhte Qualität und auch Quantität des Ernteertrages im Vergleich zu bisher als optimal gedüngt erscheinenden Pflanzen.

Der Begriff der Fermentierung/Fermentation organischer Abfallstoffe ist hier im weitesten Sinne gemeint und bedeutet den mikrobiellen Abbau pflanzlicher, tierischer und sonstiger organischer Substanzen. Dazu zählen also insbesondere die Kompostierung und Humifizierung, der Abbau von organischen Haus- und Industrieabfällen, die Flächenbehandlung von land- und forstwirtschaftlich genutzten Böden und andere Abbauverfahren für organische Abfallstoffe unter Einwirkung von Mikroorganismen.

In dem erfindungsgemäßen Verfahren dieser Erfindung ist es bevorzugt, unlösliche Mineralien und/oder Gesteinsmehle und/oder Aschen und/oder Flug- und Filterstaube und/oder Spurenelement-Zusätze durch mikronisierte organische Abfälle zu Mineralhumus (Vollwertdünger) aufzuschließen.

Wesentlich für den erfindungsgemäßen Vollwertdünger (Mineralhumus) ist, daß er unlösliches Kalium und Magnesium enthält. Gegenüber bislang verwendeten Kalidüngern ist der erfindungsgemäße Vollwertdünger durch die Unlöslichkeit der in ihm enthaltenen Magnesium- und Kaliumsalze von entscheidendem Vorteil. Die Schädlichkeit von wasserlöslichen Kaliumverbindungen im Dünger wird offensichtlich durch die Tatsache, daß Kressesamen auf einem mit löslichem Kaliumsalz ergänztem Traubentrester oder Pilzmycel-Humus-Dünger nicht keimt.

Das erfindungsgemäße Mineraliengemisch enthält zumindest die folgenden Komponenten: mindestens ein unlösliches Kalium-Mineral, vorzugsweise ein Kaliumsilikat, insbesondere Kalifeldspat ($K[AlSi_3O_8]$), mindestens ein unlösliches Mg-Mineral, eine Ca-Verbindung, vorzugsweise Calciumsulfat, einen Ton, vorzugsweise Bentonit/Montmorillonit, Silikat(e) (z. B. Aschen und Stäube aus Braunkohlekraftwerken, Lavamehl, Kalk/Kieselalgen oder pulverisiertes Glas), unlösliche(s) Phosphat(e), vorzugsweise Thomasmehl. Bevorzugterweise werden dem Mineraliengemisch noch Spurenelemente wie z. B. Fe, Co, Cu, Mn, Mo, V, W, Ti, Ni, Zn, Se, F, Br, I, As, Sn, Ge, S, Al zugesetzt.

Eine bevorzugte Calcium-Verbindung ist Calciumsulfat, was auf verschiedene Eigenschaften des Calciumsulfats zurückzuführen ist. Der wichtigste Vorteil des Gipses gegenüber anderen Ca-Verbindungen beruht auf seiner ausgezeichneten Fähigkeit, leicht flüchtigen Ammonium-Stickstoff, der etwa 50 bis 70 % des Gesamtstickstoffgehaltes von Jauche, Gülle, etc. ausmacht und enzymatisch aus dem mit dem Harn ausgeschiedenen Harnstoff gebildet wird, komplex zu binden, die Verflüchtigung der Ammoniumdämpfe in die Atmosphäre zu verhindern und die Stickstoffverstoffwechslung auf eine bisher unerreichte Effizienz zu steigern. Als zusätzliche(s) Calcium enthaltende(s) Material(ien) ist/sind Stichschlamm und/oder Zuckerkalk aus Papier- bzw. Zuckerfabriken bevorzugt, die Calcium in Form von Calciumcarbonat enthalten.

Um die Ausbildung der Krümelsubstanz des Bodens (des Ton-Humus-/Ton-Eiweiß-Komplexes) zu ermöglichen, ist die Verwendung von Bentonit/Montmorillonit als Ton bevorzugt. Dies deshalb, da die Bildung von Huminsäuren (als Abbauprodukt organischer Substanzen) die Bildung saurer -COOH-Gruppen bedeutet. Diese COOH-Gruppen werden durch Mineralbasen (Alkali-, Erdalkaliionen) neutralisiert und dadurch vor weiterem oxidativen Abbau besser als die freien Säuren geschützt. Die Neutralisierung führt konsequenterweise auch zu einer Pufferwirkung, die auf Grund der hohen Ionenaustauscherfähigkeit des Bentonit weiter erhöht wird, so daß für das Leben im Boden günstige Ionen- und pH-Bedingungen erzielt bzw. verbessert werden können.

Silikate als Zusatz zu dem Mineraliengemisch erfüllen die Aufgabe, in Folge von relativ agressiven Ausscheidungen (Citronen-, Salz-, Flußsäure) von Mikroben und Feinwurzeln, als anorganische Kieselsäure(n) in Lösung zu gehen und somit das Stützgewebe, insbesondere in den Knoten von Halmen und Hölzern, zu verstärken und die Beständigkeit der Pflanzen gegenüber Insektenfraß zu erhöhen. Darüberhinaus wirken sie für sich als sogenanntes Bodenverbesserungmittel.

Wenn die Kieselsäure(n) aber in eine Mikrobenpassage gelangen, erfolgt eine Biomethylierung der Kieselsäure(n), die in organischer Form nachweislich als Katalysator bei der Synthese von (organischem) Protein aus anorganischen Stickstoffsalzen wirken.

Das erfindungsgemäße Verfahren zur Bildung von Krümelsubstanz garer Agrarböden durch biologischen Aufschluß von Mineralien gemäß Patentanspruch 1 wird nachfolgend genauer beschrieben.

Der organische Abfall wird sortiert und anschließend in einer Grobmühle (Grinder) vorzerkleinert. Der nächste Schritt des vollautomatisierten Verfahrens ist die Metallabscheidung mit einem Magneten für Eisenmetalle und einem Wirbelstrommagneten für Nichteisenmetalle, woraufhin das nur noch organische Substanzen enthaltende Abfallgemisch in eine Feinmühle eingetragen wird. Dort wird es unter homogener Beimischung eines vorab feinst zerkleinerten Mineraliengemisches mit einem Paddelmixer mikronisiert/zerfasert und zu einem wasserreichen festen Nährboden umgesetzt. Alternativ können auch Schraubenmühlen für die Mikronisierung des organischen Abfalls verwendet werden.

Während der organische Abfall bisher für eine konventionelle Kompostierung auf eine durchschnittliche Partikelgröße von 2 - 5 cm zerkleinert wurde, bedeutet "Mikronisieren" erfindungsgemäß eine Zerkleinerung der organischen Abfallstoffe auf Größen unter 1 mm, vorzugsweise unter 0,1 mm, besonders bevorzugt 0,01-0,1 mm. Diese Zerkleinerung ist ausreichend, um Zellstrukturen zu zerstören und Zellinhaltstoffe freizusetzen.

Als organischer Abfall, der für das Verfahren gemäß Patentanspruch 1 Verwendung finden kann, werden organische Substanzen jedweder Art verstanden, insbesondere Papier, Leder, Hausmüll, Textilien, tierischer und pflanzlicher Küchenabfall, organischer Abfall aus Garten-, Land-, Forstwirtschaft, Tang, Klärschlamm und Fäkalien. Besonders bevorzugt ist die Verwendung eines Gemisches aus Klärschlamm und unsortiertem Hausmüll (lediglich Metalle sind zuvor entfernt worden), wobei die Gewichtsverhältnisse 1-10:1-10, bevorzugterweise 1-5:2-10, sind. Besonders bevorzugt ist ein Verhältnis (bezogen auf das Gewicht) von 1:2-8, speziell 1:3-6. Auf diese Weise wird nicht nur die Fermentation optimiert. Vielmehr werden die anfallenden Siedlungsabfälle Hausmüll und Klärschlamm optimal wiederverwendet.

Das erfindungsgemäß verwendete Mineraliengemisch enthält als Komponenten zumindest: a) Kalium in unlöslicher Form (insbesondere Kalifeldspat), b) Silikat(e), c) unlösliche(s) Phosphat(e) und d) Magnesium in unlöslicher Form und gegebenenfalls e) Spurenelemente. Bevorzugt sind Gemische, die eine oder mehrere Elemente aus der aus Fe, Co, Cu, Mn, Mo, V, W, Ti, Ni, Zn, Se, S, Al, F, Br, I, As, Sn und Ge bestehenden Gruppe enthalten. Die Komponenten des Mineraliengemisches werden, bezogen auf das Gewicht, im Verhältnis 1-10:1-10:1-10:1-10 (a:b:c:d), vorzugsweise im Verhältnis 1:1:1:0,5 (a:b:c:d) verwendet. Der Spurenelemente-Anteil beträgt, bezogen auf 1-10 Gewichtsteile eines jeden der Bestandteile a), b), c) und d) 0,01-1, vorzugsweise 0,1-1 Gewichtsteile.

Das Mineraliengemisch wird vor Einbringung in die Feinmühle feinst zerkleinert (pulverisiert), d.h., auf eine durchschnittliche Teilchengröße von weniger als 0.1 mm, vorzugsweise auf eine Größe von 10-50 $\mu$m, gebracht. Das gleiche gilt für die Ca-Verbindung, sofern diese nicht durch eine geringe Löslichkeit eine Quasi-Mikronisierung erfährt. Ton ist als submikroskopisches Mineral mit einer Primärteilchengröße von nur etwa 0,2 $\mu$m bereits feinst zerkleinert und muß lediglich unter Verwendung von Feuchtigkeit desagglomeriert werden.

Dieses vorzugsweise homogene Gemisch aus feinst zerkleinerten Mineralien, feinst zerkleinerter bzw. geringfügig löslicher Ca-Verbindung, mikronisiertem organischem Abfall (pflanzlich und tierisch) sowie dem Ton wird als sogenanntes Vollwertdüngermaterial bezeichnet. Dieses wird in einen Fermenter eingeleitet und dort fermentiert. Die geringe Teilchengröße aller Bestandteile gewährleistet eine optimal homogene Durchmischung des Vollwertdüngermaterials und somit eine optimale Fermentation, die die Bildung der sogenannten Primäraggregate in statu nascendi ermöglicht. Diese Primäraggregate werden, wie oben beschrieben, durch Mikroben zu 1 - 3 mm großen Krümeln, den sog. Aggregaten 2. Ordnung, umgesetzt.

Die einzelnen Komponenten liegen, bezogen auf das Gewicht im Verhältnis A, vorzugsweise im Verhältnis B, insbesondere im Verhältnis C, vor (Mineraliengemisch:organischer Abfall:Ton:Ca-Verbindung). Das Verhältnis der einzelnen Bestandteile des Mineraliengemisches ist, bezogen auf das Gewicht, 1-10:1-10:1-10:1-10, vorzugsweise 1:1:1:0,5 (Reihenfolge entsprechend a) - d) auf Seite 12).

4-40:30-1500:1-10:1-10       A

5-30:50-1000:1-8:1-8       B
10-20:100-500:1-5:1-5       C

Die Fermentierung des Vollwertdüngermaterials erfolgt unter mikrobengerechten Rahmenbedingungen nach homogener Vermischung der einzelnen Komponenten. Bevorzugterweise wird die Fermentierung in einer sporadisch rotierenden Trommel mit Zwangsbegasung und Optimierung der relativen Feuchte (rH/rF)/Wasseraktivität ($a_w$) innerhalb von 24 bis 48 Stunden durchgeführt.

Die ungewöhnliche, in der Abfalltechnik nicht übliche Mikronisierung der einzelnen Komponenten des organischen Abfalls führt unter enormer Oberflächenvergrößerung zur Zerstörung von Zellstrukturen und damit zur Freisetzung von Zellinhaltstoffen, z.B. Enzymen, und verhindert somit durch eine verbesserte Flüssigkeitsaufnahmefähigkeit auch die Bildung von Sickerwasser.

Die bei der Zerkleinerung des organischen Abfalls freigesetzten Zellinhaltsstoffe sind wegen der vergrößerten Ober- und Angriffsfläche besonders gut zugänglich für Mikroben und Sauerstoff und beginnen sofort in Umkehrung der biochemischen Gleichgewichtsreaktionen mit dem Abbau organischer Substanz. Dieser biotische Abbau wird durch eine spontane abiotische Autoxidation noch zusätzlich verstärkt. Dabei wirken z. B. Eisen-, Kupfer- und Vanadiumionen katalytisch. Die Anwesenheit von Blut hat deshalb wegen der optimal wirksamen, Eisen und Kupfer enthaltenden, Atmungsfermente einen besonderen katalytischen Effekt.

Die im Laufe der Abbaureaktionen entstehenden Carboxylgruppen werden durch die anwesenden Mineralbasen neutralisiert, gepuffert und somit vor einem weiteren oxidativen Abbau geschützt. Ziel der Umsetzung ist nämlich nicht ein völliger, vornehmlich abiotischer oxidativer Abbau der organischen Masse bis zur völligen Mineralisation zu Kohlendioxid, das dann in die Atmosphäre entweichen würde, sondern nach einem partiellen Primärabbau die Bildung von Protein (Mikroben) sowie des Kohlenhydrat-Mikrobenschleims durch biotische Stoffwechselprozesse. Letzterer ist deshalb erwünscht, weil Kohlenhydrat-Mikrobenschleim teiloxidierte und/oder seitenkettenmethylierte Cellulose aus der Bio- bzw. Blattmasse enthält, die ein extrem hohes Wasser- und Schwermetall-Bindungsvermögen besitzen, wobei das Wasserbindungsvermögen bis zum 1000fachen des Eigengewichtes betragen kann. Im Ackerboden halten Mikrobenschleime die gebildeten Primäraggregate zusammen und bilden so die sog. Krume (1-3 mm große Krümel). Zudem ist die Schleimschicht der Mikroben reich an Enzymen, die organische Substanzen abbauen können. Die entstehenden Abbauprodukte können dann von den Mikroben verstoffwechselt werden.

In diesem Verfahrensstadium erfolgt die Abpufferung der entstandenen Carboxylgruppen durch die Mineralbasen, so daß neutrale pH-Werte erzielt werden, die von den Mikroben in aller Regel bevorzugt werden. Dementsprechend beeinflußt ein neutraler pH-Wert die Geschwindigkeit der mikrobiellen Umsetzungen.

Die Fermentierungsreaktion setzt sofort ein, wenn die o. g. Komponenten - feinstzerkleinertes Mineraliengemisch, mikronisierter pflanzlicher und tierischer organischer Abfall, Ton und Ca-Verbindung, insbesondere Ca-Sulfat, unter aeroben Bedingungen zusammengebracht werden. Bevorzugt ist eine ausreichende Belüftung, um die Bildung von bei der anaeroben Faulung von Biomasse entstehenden wurzelschädigenden Stoffen zu verhindern, da diese auch durch eine nachträgliche Kompostierung bisheriger Art nicht mehr zu beseitigen sind. Der Sauerstoffbedarf der einzelnen Mikroben kann sehr unterschiedlich sein. Deshalb sollte die Sauerstoffkonzentration durch Sauerstoffzufuhr während der Fermentation entsprechend der Mikrobenarten bei 20 bis 40 Vol-%, vorzugsweise bei etwa 35 Vol-% liegen. Bei genügend kritischer Masse werden in dem Fermenter schnell Temperaturen von über 55 °C erreicht. Pathogene Keime (z. B. Cholera, Tetanus, E.coli) werden dabei sowohl aufgrund der Temperatur, vorrangig allerdings durch Antibiotika irreversibel abgetötet, die z. B. von Streptomyceten (Streptomycin) produziert werden. Die nichtpathogenen Keime werden nicht abgetötet, sondern kapseln sich vielmehr in die ruhende Sporenform ein, wenn sie ihre Lebensbedingungen wegen fehlender Nahrung, Feuchtigkeit und zu hoher/tiefer Temperatur verlieren.

Die während des geschilderten Fermentationsprozesses (mikrobiologischer Mineralaufschluß) maximal erreichten Temperaturen von 82 °C gewährleisten die Inaktivierung möglicherweise vorhandener, unerwünschter Pflanzensamen.

Der optimale Ablauf der Fermentation wird durch Einstellen eines optimalen Kohlenstoff/Stickstoff-Verhältnisses erreicht. Dieses Verhältnis beträgt (beim Ausgangsgemisch) etwa 1000:1-10:1, bevorzugt etwa 100:1-10:1, besonders bevorzugt etwa 50:1-25:1. Das C/N-Verhältnis wird durch entsprechende Abmischungen bei der Zusammenstellung des Vollwertdüngermaterials eingestellt. In einer bevorzugten Ausführungsform läßt es sich zweckmäßigerweise durch Abmischen von Klärschlamm mit unsortiertem Hausmüll, bezogen auf das Gewicht, im Verhältnis 1-10:1-10, vorzugsweise im Verhältnis 1-5:2-10, insbesondere im Verhältnis 1:2-8, besonders bevorzugt 1:3-6, erzielen.

Mikroben, insbesondere Bakterien, benötigen, um aerob fermentativ aktiv zu sein, eine relativ hohe, vom Mikrobentyp abhängige Wasseraktivität (relative Feuchte), die normalerweise nicht sehr temperaturabhängig ist. Dementsprechend ist für den erfolgreichen Ablauf des mikrobiologischen Blitz-/Mineralaufschlusses zur Bildung der Krümelsubstanz nach Anspruch 1 die Einstellung der optimalen relativen Feuchte (rH/rF)/Wasseraktivität ($a_w$) erforderlich. Diese liegt vorzugsweise im Bereich von 40 bis 100 %, insbesondere im Bereich von 50 bis 95 %.

Nach maximal 48-stündiger "Heißphase" mit exaktem Scheitelpunkt (d. h. Temperaturmaximum, IR-spektroskopisch nachgewiesenes Ende der Mikrobenaktivität auf Grund des Optimums der Huminsäure-Bildung), wird eine Masse, eine Krümelsubstanz des garen Agrarboden (Mineralhumus, Vollwertdünger), erhalten, die (der) alle Voraussetzungen für eine Bodenverbesserung und ein außergewöhnlich erhöhtes, biologisch intaktes Wachstum bei gleichzeitig hoher Widerstandsfähigkeit der Pflanzen vereint. Diese Masse ist ein Vollwertdünger (Mineralhumus), der die (auf Seite 9 beschriebenen) gewünschten Eigenschaften aufweist.

Gemäß einer speziellen Ausführungsform der Erfindung erfolgt das Fermentierungsverfahren als Wurmkompostierungsverfahren, bei dem Küchenabfälle (d. h. tierischer und pflanzlicher Abfall) und Tierdung mit dem optimalen Mineralmehlgemisch versetzt werden. Freilich hat dieses Verfahren im Vergleich zu dem vorher beschriebenen mikrobiellen Blitzaufschluß einen entsprechend langen Zeit- und Flächenbedarf.

Die Erfindung betrifft nach einer speziellen Ausführungsform außerdem "In situ"-Anwendungen des Fermentierungsverfahrens. Z. B. wird das vorzugsweise homogene Gemisch aus organischem Abfall, Ton, Ca-Verbindung und feinst zerkleinertem Mineraliengemisch direkt in/auf den Boden ausgebracht. Wesentlich ist dabei, daß es sich um bedeckten Boden handelt, d. h. es müssen Wurzeln vorhanden sein. Dann erfolgt die Fermentation durch die Bodenmikroben. Bevorzugt sind das Einmischen der feinstteiligen Mineralien/Gesteinsmehle, des Tons und der Ca-Verbindung in flüssigkeitsreiche organische Abfälle, insbesondere Jauche und/oder Gülle und/oder Fruchtpulpen und/oder Klärschlamm (d.h. Wirtschafts- bzw. Naturdünger) und das sofort nach der Aberntung der z. B. Getreidefelder, vorzugsweise mit einer Klee-Untersaat, flächige Ausbringen dieses Gemisches. Das Ausbringen sofort nach der Ernte bewirkt eine hohe biologische Umsetzung durch die noch relativ hohen Bodentemperaturen. Die flüssigkeitsreichen organischen Wirtschaftsdünger (Gülle, Jauche, etc.), deren Stickstoffgehalt zum größten Teil (mindestens 50 bis etwa 70 %) als Ammoniumstickstoff vorliegt, der beim flächigen Ausbringen nach bisheriger konventioneller Art größtenteils als Ammoniak in die Atmosphäre entweicht (anstatt in den Boden zu gelangen) und somit nach neuesten Erkenntnissen wesentlich für das Sterben der Wälder mirverantwortlich ist, werden erfindungsgemäß unter Schonung der Umwelt sinnvoll wiederverwendet wobei ihr Stickstoffgehalt dem Boden zugeführt wird.

Das gleichzeitig ausgebrachte, in dem flüssigkeitsreichen organischen Abfall enthaltene Calciumsulfat sorgt für die Komplexierung des Stickstoffs und bewirkt dessen Lagerung im Erdreich in einer (unlöslichen) Depotform. Pflanzen, die mittels ihrer Wurzelsysteme einmal Kontakt mit diesem Stickstoff-Depot aufgenommen haben, verwerten den vorrätigen Ammoniumstickstoff aufgrund der Phytotoxizität der Ammoniumionen nur von den Grenzflächen her und nur, wie es ihrem Wachstum und Stickstoffbedarf entspricht.

Die erfindungsgemäß hergestellte Krümelsubstanz (Mineralhumus, Vollwertdünger) sorgt aufgrund des komplexierten Ammoniumstickstoffs für eine optimale Stickstoffversorgung der Pflanzen infolge einer phytotoxischen Regulation der Ammoniumionen-Aufnahme durch die Pflanzen selbst.

Beispiel 1:

Organischer Abfall aus 65 Gew.-Teilen unsortiertem Hausmüll und 15 Gew.-Teilen entwässertem Klärschlamm wurde mit je 1 Gew.-Teil Bentonit, REA-Gips, Kalifeldspat, Thomasmehl und Magnesit sowie 1/10 Gewichtsteil Verhüttungsabfällen als Spurenelemente-Zusatz gemeinsam mikronisiert und auf eine Wasseraktivität von 0,95 eingestellt.

Die Fermentation in einer rotierenden Trommel von 20 cm³ Inhalt erfolgte bei Sauerstoffgehalten von ca. 35 Vol.-% bei stetig steigender Temperatur als Äquivalent der Mikrobenaktivität bis zum Scheitelpunkt bei 82°C nach 24 Stunden und damit dem Reaktionsende mit anschließender Abkühlung.

Der/die fermentativ gebildete Vollwertdünger (Krümelsubstanz, Mineralhumus) wurde verschiedenen Pflanzen verabreicht. Es wurden enorme Qualitäts- und Quantitätssteigerungen bei Pflanzen und deren Früchten erzielt. Darüber hinaus wurde die Abwehrkraft der Pflanzen gegen Schadeinwirkung so weit gestärkt, daß die Schäden (Krankheiten) geheilt werden konnten (z.B. ein von Mehltau befallener uralter Apfelbaum kränkelte seit Jahren und trug nur noch 3 bis 4 Äpfel pro Jahr; nach einer Herbstbehandlung mit der erfindungsgemäßen Krümelsubstanz war binnen weniger Monate eine unglaubliche Veränderung eingetreten, die u.a. in einer nie dagewesenen Blüte im folgenden Frühjahr und dem Verschwinden des Mehltaubefalls sichtbar wurde; außerdem konnten im gleichen Jahr 250 kg makelloser Äpfel geerntet werden).

Beispiel 2:

In einem 220 Liter Fermenter wurden (a) mikronisierte Garten- und Küchenabfälle (deren Struktur nicht mehr erkennbar war) mit (b) dem Inhalt einem Katzenklos und Hundekot sowie 2 Wegwerfwindeln, mit (c) Tonmehl, (d) Gips und den weiteren Mineralstoffen aus (e) Kalifeldspat, (f) Kraftwerksasche, (g) Klärbeckennachfällung und (h) Dolomit sowie (i) Seetang-Extrakt als Spurenelemente-Zusatz im Verhältnis 60:15:2:2:2:2:2:2:0,2 gemischt und auf einen Feuchtegehalt von ca. 50 Gewichtsprozenten eingestellt und fermentiert. Die Reaktion fand nach 48 Stunden bei einer Spitzentemperatur von 72°C ihr Ende.

Der so erhaltene Mineralhumus wurde u.a. Freilandtomaten-Jungpflanzen verabreicht. Statt wie bisher 15 cm in 8 Wochen zu wachsen wurden nunmehr 25 cm erreicht. Außergewöhnlich starke Stengel und sehr viele große Blätter sowie Früchte mit Gewichten zwischen 250 und 400 Gramm bei einem Durchmesser von 8-11 cm gegenüber bisher 4-5 cm waren das Ergebnis.

Die Tomaten waren makellos im Aussehen, innen ohne Hohlraum, schnittfest und von einer bisher nicht gekannten aromatischen Schmackhaftigkeit sowie außergewöhnlich lagerfähig.

**Patentansprüche**

1. Verfahren zur Bildung von Krümelsubstanz garer Agrarböden (Mineralhumus) durch biologischen Aufschluß von Mineralien in Gegenwart von Ca-Verbindungen, Ton und protein- und lignozellulosehaltigen pflanzlichen und proteinhaltigen tierischen organischen Abfällen, das die Schritte umfaßt:

(a) ein Mineraliengemisch, das zumindest Kalium, Magnesium, Phosphat und Silikat, alle in unlöslicher Form, enthält, feinst zu zerkleinern,

(b) die pflanzlichen und tierischen organischen Abfälle einer üblichen Vorzerkleinerung zu unterwerfen,

(c) den organischen Abfall, vorzugsweise unter homogener Beimischung des Mineraliengemisches, zu mikronisieren, und

(d) das Gemisch aus mikronisiertem organischem Abfall und feinst zerkleinertem Mineraliengemisch in Gegenwart einer feinst zerkleinerten Ca-Verbindung und von Ton unter mikrobengerechten Bedingungen einer Fermentation zu unterwerfen.

2. Verfahren nach Anspruch 1, bei dem Kalium, Magnesium, Phosphat und Silikat, bezogen auf das Gewicht, im Verhältnis 1-10 : 1-10 : 1-10 : 1-10, vorzugsweise im Verhältnis 1 : 0,5 : 1 : 1, verwendet werden.

3. Verfahren nach Anspruch 1 oder 2, bei dem als Mineraliengemisch ein solches verwendet wird, das außerdem ein oder mehrere Spurenelemente wie Fe, Co, Cu, Mn, Mo, V, W, Ti, Ni, Zn, Se, S, F, Br, I, As, Sn, Ge und Al enthält, vorzugsweise in einer Menge von, bezogen auf 1-10 Gewichtsteile eines jeden der Bestandteile Kalium, Magnesium, Phosphat und Silikat, 0,01-1, vorzugsweise 0,1-0,5, Gewichtsteilen.

4. Verfahren nach einem der vorhergehenden Ansprüche, bei dem, bezogen auf 1-10 Gewichtsteile eines jeden der Bestandteile Kalium, Magnesium. Phosphat und Silikat, 1-10 Gewichtsteile Ton und/oder 1-10 Gewichtsteile einer Calciumverbindung verwendet werden.

5. Verfahren nach einem der vorhergehenden Ansprüche, bei dem als Ton ein Bentonit, ein Vermiculit oder ein Illit und/oder bei dem als Kaliummineral ein Kaliumsilikat, insbesondere Kalifeldspat und/oder bei dem als Calciumverbindung Calciumsulfat, insbesondere Rauchgasentschwefelungsanlagen(REA)-Gips, verwendet werden.

6. Verfahren nach einem der vorhergehenden Ansprüche bei dem als silikathaltiges Material Aschen und/oder Flugstäube und/oder Filterstäube aus Kraftwerken, insbesondere aus Braunkohle-Kraftwerken bzw. aus Steinkohle-Wirbelschicht-Kraftwerken, Kieselalgen, Nilschlamm, Lavamehl und/oder ein anderes Urgesteinsmehl und/oder bei dem als Phosphat enthaltendes Material Erdphosphat (Apatit) und/oder Thomasmehl und/oder eine Klärbekken-Nachfällung verwendet wird/werden.

7. Verfahren nach einem der vorhergehenden Ansprüche, bei dem als Spurenelemente-Zusatz ein oder mehrere Produkte aus der aus Erzen, Krätzen, Räuchen, Stäuben, Schlacken, Legierungen, Seetang und Seetang-Extrakt bestehenden Gruppe verwendet wird/werden.

8. Verfahren nach einem der vorhergehenden Ansprüche, bei dem als organischer Abfall Hausmüll und/oder Papier und/oder Leder und/oder Textilien und/oder tierische und pflanzliche Küchenabfälle und/oder Abfälle aus Garten-, Land-, Forstwirtschaft und/oder Tang und/oder Klärschlamm und/oder Fäkalien verwendet wird/werden.

9. Verfahren nach einem der vorhergehenden Ansprüche, bei dem als organischer Abfall Klärschlamm und Hausmüll, bezogen auf das Gewicht, im Verhältnis 1-10 : 1-10, bevorzugt 1-5 : 2-10, besonders bevorzugt 1 : 2-8, am meisten bevorzugt 1 : 3-6, verwendet werden.

10. Verfahren nach einem der vorhergehenden Ansprüche, bei dem, bezogen auf das Gesamtgewicht von Mineralien mit/ohne Spurenelemente, Ton und Calciumverbindung, 5-200, insbesondere 10-20, Gewichtsteile organischer Abfall verwendet werden.

11. Verfahren nach einem der vorhergehenden Ansprüche, bei dem das Gemisch aus organischem Abfall, Ton, Ca-Verbindung und Mineraliengemisch mit/ohne Spurenelemente, vorzugsweise in homogener Verteilung, in/auf den Boden ausgebracht wird, um dort von den Bodenmikroben fermentiert zu werden, wobei der organische Abfall vorzugsweise mindestens einen flüssigkeitsreichen organischen Abfall, insbesondere Gülle und/oder Fruchtpulpen und/oder Klärschlamm, umfaßt.

12. Verfahren nach einem der Ansprüche 1 bis 10, bei dem die Mikronisierung und/oder Fermentation durch Zugabe von Sauerstoff, insbesondere bei erhöhtem Sauerstoffgehalt, vorzugsweise bei einer Sauerstoff-Konzentration von 20-40 Vol% in der Gasphase, vorzugsweise bei etwa 35 Vol%, und/oder bei dem die Fermentation unter kontrollierter relativer Feuchte (rH/rF)/Wasseraktivität ($a_w$),bevorzugt bei einer Wasseraktivität von 40-100%, insbesonders 50-95%, durchgeführt werden.

13. Verfahren nach einem der Ansprüche 1 bis 12, bei dem, bezogen auf das Gesamtgewicht aller Bestandteile, Kalium und Magnesium in einer Menge von 0,05-1,0% vorzugsweise 0,2-0,75% und Calcium in einer Menge von 0,1-3%, vorzugsweise 0.5-2%, verwendet werden.

14. Vollwertdüngermaterial, enthaltend das feinst zerkleinerte Mineraliengemisch, definiert in einem der Ansprüche 1 oder 3, den mikronisierten protein- und lignozellulosehaltigen pflanzlichen und proteinhaltigen tierischen organischen Abfall, insbesondere den gemäß Anspruch 8, sowie Ton, insbesondere einen Bentonit und/oder Vermiculit und/oder Illit, und eine feinst zerkleinerte Ca-Verbindung, insbesondere Ca-Sulfat.

15. Vollwertdüngermaterial nach Anspruch 14, bei dem das Mineraliengemisch, der organische Abfall, der Ton und die Calciumverbindung, bezogen auf das Gewicht, im Verhältnis 4-40:30-1500:1-10:1-10, vorzugsweise im Verhältnis 5-30:50-1000:1-8:1-8, insbesondere im Verhältnis 10:20:100-500:1-5:1-5, enthalten sind.

16. Vollwertdüngermaterial nach Anspruch 14 oder 15, bei dem, bezogen auf das Gesamtgewicht aller Bestandteile, Kalium und Magnesium in einer Menge von 0,05-1,0%, vorzugsweise 0,2-0,75%, und Calcium in einer Menge von 0,2-3%, vorzugsweise 0,5-2%, enthalten sind.

17. Vollwertdünger (Mineralhumus), erhältlich als das Produkt des Verfahrens nach einem der Ansprüche 1-13.

18. Verwendung des Vollwertdüngers nach Anspruch 17 zur Behandlung von Boden und Pflanzen, wobei der Vollwertdünger dem Boden in homogener Verteilung in einer Menge von 1 bis 6, vorzugsweise 2 bis 5 Prozent, bezogen auf das Gewicht des zu düngenden Bodens, zugesetzt wird.

## Claims

1. A process for producing the crumbly component, mineral humus, through the biological disintegration of minerals in the presence of Ca compounds, clay and protein- and lignocellulose-containing plant and protein-containing animal organic wastes, said process comprising the following steps:
   (a) pulverizing a mineral mixture, containing at least potassium, magnesium, phosphate and silicate, all in insoluble form;
   (b) pre-grinding the plant and animal organic wastes;
   (c) micronizing the organic waste, preferably with homogeneous admixture of the mineral mixture; and
   (d) subjecting to fermentation the mixture of micronized organic waste and pulverized mineral mixture under microbe-friendly conditions in the presence of a pulverized Ca compound and clay.

2. The process according to claim 1, wherein potassium, magnesium, phosphate and silicate are used, with reference to the weight, in the ratio 1-10 : 1-10 : 1-10 : 1-10, preferably in the ratio 1 : 0.5 : 1 : 1.

3. The process according to claims 1 or 2, wherein the mineral mixture used is one that additionally contains one or more trace elements such as Fe, Co, Cu, Mn, Mo, V, W, Ti, Ni, Zn, Se, S, F, Br, I, As, Sn, Ge and Al, preferably in a quantity of 0.01-1, preferably 0.1-0.5 parts by weight with reference to 1-10 parts by weight of each of the constituents potassium, magnesium, phosphate and silicate.

4. The process according to any one of the preceding claims, wherein, with reference to 1-10 parts by weight of each of the constituents potassium, magnesium, phosphate and silicate, 1-10 parts by weight of clay and/or 1-10 parts by weight of a calcium compound are used.

5. The process according to any one of the preceding claims, wherein a bentonite, a vermiculite or an illite is used as the clay and/or wherein a potassium silicate, particularly potassium feldspar, is used as the potassium mineral and/or wherein calcium sulfate, particularly gypsum from flue-gas desulfurization plants, is used as the calcium compound.

6. The process according to any one of the preceding claims, wherein ashes and/or fly ashes and/or filter dusts from power stations, particularly from lignite-fired power stations or from bituminous-coal-fired fluidized-bed power stations, diatoms, Nile sludge, lava powder and/or another primary-rock powder is/are used as the silicate-containing material and/or wherein apatite and/or basic slag and/or clarification-basin after precipitation is/are used as the phosphate-containing material.

7. The process according to any one of the preceding claims, wherein one or more products from the group consisting of ores, drosses, smokes, dusts, slags, alloys, kelp and kelp extract is/are used as the trace-element addition.

8. The process according to any one of the preceding claims, wherein domestic refuse and/or paper and/or leather and/or textiles and/or animal and plant kitchen wastes and/or wastes from horticulture, agriculture and forestry and/or kelp and/or sewage sludge and/or faeces is/are used as the organic waste.

9. The process according to any one of the preceding claims, wherein sewage sludge and domestic refuse are used as the organic waste, with reference to the weight, in the ratio 1-10 : 1-10, preferably 1-5 : 2-10, particularly preferably 1 : 2-8, most preferably 1 : 3-6.

10. The process according to any one of the preceding claims, wherein, with reference to the total weight of minerals with/without trace elements, clay and calcium compound, 5-200, particularly 10-20, parts by weight of organic waste are used.

11. The process according to any one of the preceding claims, wherein the mixture of organic waste, clay, Ca compound and mineral mixture with/without trace elements is applied, preferably in homogeneous distribution, into/onto the soil in order to be fermented there by the soil microbes, with the organic waste preferably comprising at least one liquid-rich organic waste, particularly semi-liquid manure and/or fruit pulps and/or sewage sludge.

12. The process according to any one of claims 1 to 10, wherein micronization and/or fermentation is/are carried out through the addition of oxygen, particularly at a high oxygen concentration, preferably at an oxygen concentration of 20-40 vol. % in the gaseous phase, preferably at approximately 35 vol. % and/or wherein fermentation is carried out under controlled relative humidity (rH/rF)/water activity ($a_w$), preferably at a water activity of 40-100%, particularly 50-95%.

13. The process according to any one of claims 1 to 12, wherein, with reference to the total weight of all constituents, potassium and magnesium are used in a quantity of 0.05-1.0%, preferably 0.2-0.75%, and calcium in a quantity of 0.1-3%, preferably 0.5-2%.

14. A whole-nutrient fertilizer material, containing the pulverized mineral mixture, defined in any one of claims 1 or 3, the micronized protein- and lignocellulose-containing plant and protein-containing animal organic waste, particularly the one according to claim 8, as well as clay, particularly a bentonite and/or vermiculite and/or illite, and a pulverized Ca compound, particularly Ca sulfate.

15. The whole-nutrient fertilizer material according to claim 14, wherein the mineral mixture, the organic waste, the clay and the calcium compound are contained, with reference to the weight, in the ratio 4-40:30-1500:1-10:1-10, preferably in the ratio 5-30:50-1000:1-8:1-8, particularly in the ratio 10:20:100-500:1-5:1-5.

16. The whole-nutrient fertilizer material according to claims 14 or 15, wherein, with reference to the total weight of all constituents, potassium and magnesium are contained in a quantity of 0.05-1.0%, preferably 0.2-0.75%, and calcium in a quantity of 0.2-3%, preferably 0.5-2%.

17. A whole-nutrient fertilizer (mineral humus), obtainable as the product of the process according to any one of claims 1-13.

18. Use of the whole-nutrient fertilizer according to claim 17 for the treatment of soils and plants, with the whole-nutrient fertilizer being added to the soil in homogeneous distribution in a quantity of 1 to 6, preferably 2 to 5 per cent, with reference to the weight of the soil to be fertilized.

**Revendications**

1. Procédé pour former une substance grumeleuse de sols meubles à usage agricole (humus minéral) par attaque biologique de produits minéraux en présence de composés de Ca, d'argile et de déchets organiques végétaux, contenant des protéines et de la lignocellulose, et animaux, contenant des protéines, qui comprend les étapes consistant :

    (a) à broyer jusqu'à une grande finesse un mélange de produits minéraux contenant au moins du potassium, du magnésium, du phosphate et du silicate, tous sous forme insoluble,

    (b) à soumettre à un prébroyage usuel les déchets organiques animaux et végétaux,

    (c) à microniser les déchets organiques, de préférence en ajoutant dans des conditions homogènes le mélange de produits minéraux, et

    (d) à soumettre à une fermentation, dans des conditions convenant à la prolifération des microbes, et en présence d'un composé du Ca très finement broyé et d'argile, le mélange des déchets organiques micronisé et du mélange de produits minéraux finement broyé.

2. Procédé selon la revendication 1, dans lequel on utilise du potassium, du magnésium, un phosphate et un silicate selon une proportion pondérale de 1-10:1-10:1-10:1-10, de préférence de 1:0,5:1:1.

3. Procédé selon la revendication 1 ou 2, dans lequel on utilise comme mélange de produits minéraux un mélange de ce type qui contient en outre un ou plusieurs éléments en traces tels que Fe, Co, Cu, Mn, Mo, V, W, Ti, Ni, Zn, Se, S, F, Br, I, As, Sn, Ge et Al, de préférence en une quantité, rapportée à 1-10 parties en poids de chacun des constituants potassium, magnésium, phosphate et silicate, de 0,01-1 et de préférence de 0,1-0,5 partie en poids.

**4.** Procédé selon l'une des revendications précédentes, dans lequel, par rapport à 1-10 parties en poids de chacun des constituants potassium, magnésium, phosphate et silicate, on utilise de 1 à 10 parties en poids d'argile et/ou de 1 à 10 parties en poids d'un composé du calcium.

**5.** Procédé selon l'une des revendications précédentes, dans lequel on utilise comme argile une bentonite, une vermiculite ou une illite, et/ou dans lequel on utilise comme produit minéral du potassium un silicate de potassium, de préférence le feldspath potassique, et/ou dans lequel on utilise comme composé du calcium le sulfate de calcium, en particulier le gypse provenant des installation de désulfuration des fumées.

**6.** Procédé selon l'une des revendications précédentes, dans lequel on utilise comme matériau contenant un silicate des cendres et/ou des poussières volantes et/ou des poussières de filtration provenant de centrales électriques, en particulier de centrales électriques à lignite ou de centrales électriques à houille à lit fluidisé, des diatomées, des boues du Nil, de la poudre de lave et/ou une autre poudre de roche primitive, et/ou dans lequel on utilise comme matériau contenant un phosphate un phosphate naturel (apatite) et/ou des scories et/ou le produit de post-précipitation des bassins de décantation.

**7.** Procédé selon l'une des revendications précédentes, dans lequel on utilise comme éléments en trace ajoutés un ou plusieurs produits choisis parmi les minerais, les crasses, les fumées, les poussières, les laitiers, les alliages, le varech et les extraits de varech.

**8.** Procédé selon l'une des revendications précédentes, dans lequel on utilise comme déchets organiques les ordures ménagères et/ou le papier et/ou le cuir et/ou les textiles et/ou les déchets de cuisine d'origine animale et végétale et/ou les déchets de l'horticulture, de l'agriculture et de la sylviculture et/ou le varech et/ou les boues des bassins de décantation et/ou les matières fécales.

**9.** Procédé selon l'une des revendications précédentes, dans lequel on utilise comme déchets organiques des boues de bassins de décantation et des ordures ménagères, selon une proportion pondérale de 1-10:1-10, de préférence de 1-5:2-10, en particulier de 1:2-8 et tout spécialement de 1:3-6.

**10.** Procédé selon l'une des revendications précédentes, dans lequel on utilise, par rapport au poids total des produits minéraux avec/sans éléments en traces, de l'argile et du composé du calcium, une quantité de 5 à 200 et en particulier de 10 à 20 parties en poids de déchets organiques.

**11.** Procédé selon l'une des revendications précédentes, dans lequel le mélange de déchets organiques, d'argile, du composé du calcium et du mélange de produits minéraux avec/sans éléments en traces, de préférence selon une répartition homogène, est appliqué dans/sur le sol, pour y fermenter sous l'effet de microbes du sol, les déchets organiques comprenant de préférence au moins un déchet organique à haute teneur en liquides, en particulier un lisier et/ou des pulpes de fruit et/ou des boues de décantation.

**12.** Procédé selon l'une des revendications 1 à 10, dans lequel la micronisation et/ou la fermentation est effectuée par addition d'oxygène, en particulier en présence d'une haute teneur en oxygène, de préférence en présence d'une concentration d'oxygène de 20 à 40 % en volume dans la phase gazeuse, de préférence d'environ 35 % en volume, et/ou dans lequel la fermentation est mise en oeuvre sous une humidité relative contrôlée (rH/rF)/activité d'eau ($a_w$), de préférence en présence d'une activité d'eau de 40 à 100 % et en particulier de 50 à 95 %.

**13.** Procédé selon l'une des revendications 1 à 12, dans lequel, par rapport au poids total de l'ensemble des constituants, on utilise du potassium et du magnésium en une quantité de 0,05-1,0 % et de préférence de 0,2-0,75 %, et du calcium en une quantité de 0,1-3 % et de préférence de 0,5-2 %.

**14.** Engrais complet, contenant le mélange de produits minéraux finement broyé selon l'une des revendications 1 à 3, les déchets organiques micronisés, végétaux contenant des protéines et de la lignocellulose et animaux contenant des protéines, en particulier les déchets selon la revendication 8, ainsi que de l'argile, en particulier une bentonite et/ou une vermiculite et/ou une illite, et un composé finement broyé du calcium, en particulier le sulfate de Ca.

**15.** Engrais complet selon la revendication 14, dans lequel le mélange de produits minéraux, les déchets organiques, l'argile et le composé du calcium sont contenus selon une proportion pondérale de 4-40:30-1500:1-10:1-10, de préférence selon une proportion de 5-30:50-1000: 1-8:1-8 et en particulier selon la proportion 10:20:100-500:1-5:1-5.

16. Engrais complet selon la revendication 14 ou 15, qui contient, par rapport au poids total de l'ensemble des constituants, du potassium et du magnésium en une quantité de 0,05-1,0 % et de préférence de 0,2-0,75 %, et du calcium en une quantité de 0,2-3 % et de préférence de 0,5-2 %.

17. Engrais complet (humus minéral) pouvant être obtenu comme produit du procédé selon l'une des revendications 1-13.

18. Utilisation de l'engrais complet selon la revendication 17 pour le traitement du sol et de végétaux, dans laquelle l'engrais complet est ajouté au sol selon une répartition homogène en une quantité de 1 à 6 et de préférence de 2 à 5 % par rapport au poids du sol à fertiliser.